# FASCICULE DE BREVET EUROPEEN

(11) **EP 0 335 852 B1**
(45) Date de publication et mention de la délivrance du brevet: **27.07.1994**
(21) Numéro de dépôt: 89870039.8
(22) Date de dépôt: 09.03.1989
(51) Int. Cl.: C13F 3/00, C13K 11/00, A23L 1/236

(54) **Produits à base de saccharose contenant des édulcorants à haut pouvoir sucrant et procédés pour leur obtention**
Kräftige Süssstoffe enthaltende Produkte auf Grund der Saccharose und Verfahren zu ihrer Herstellung
Saccharose-based products containing strong sweeteners, and processes for making the same

(30) Priorité: 30.03.1988 BE 8800371
(43) Date de publication de la demande: 04.10.1989
(60) Demande divisionnaire: 93100241.4
(73) Titulaire: "Raffinerie Tirlemontoise", société anonyme:, 1150 Bruxelles (BE)
(72) Inventeur: Daenkindt, Luc, B-9308 Gijzegem-Aalst (BE); Smits, Georges, B-9308 Gijzegem-Aalst (BE)
(74) Mandataire: Van Malderen, Michel

(56) Documents cités:
- EP-A- 0 036 738
- EP-A- 0 052 919
- EP-A- 0 102 032
- EP-A- 0 106 910
- EP-A- 0 218 570
- EP-A- 0 219 150
- EP-A- 0 334 617
- WO-A-86/06747

## Description

### Objet de l'invention

La présente invention concerne des produits à base de saccharose contenant des édulcorants à haut pouvoir sucrant se présentant sous forme d'une poudre granuleuse et s'étend à des procédés particuliers pour leur préparation.

### Résumé de l'état de la technique et buts visés par l'invention

On sait que pour des raisons diététiques ou médicales, il peut être souhaitable de remplacer une partie du saccharose dans l'alimentation par des substances édulcorantes à haut pouvoir sucrant.

La substitution totale du saccharose par des édulcorants ne satisfait pas totalement le consommateur qui souhaite retrouver dans le produit qu'il utilise le goût du sucre naturel auquel il est habitué. Une solution satisfaisante a été trouvée pour le sucre en morceaux par une formule dite allégée qui réduit d'un facteur de l'ordre de 75% l'apport calorique comparé à un morceau de sucre classique de même pouvoir sucrant.

Divers exemples de tels produits dits allégés, se composant de saccharose et d'un ou plusieurs édulcorants artificiels, se présentant sous forme de morceaux sont décrits dans les documents suivants: EP-A-0 219 150, WO-A-86 06 747, EP-A-0 106 910 et EP-A-0 218 570.

Dans le cas du sucre alimentaire dit "en poudre", l'utilisateur souhaite cependant garder ses habitudes de consommation et il serait souhaitable de disposer d'un produit sous une telle forme en poudre, qui, pour une unité volumétrique identique à celle du saccharose, présente le même pouvoir sucrant mais qui contiendrait moins de saccharose. Pour un volume pratiquement identique, le pouvoir calorique d'un tel produit serait donc réduit d'une valeur d'au moins 30% et de préférence de l'ordre de 75% par rapport au sucre habituel du commerce qui est pratiquement constitué totalement de saccharose, exception faite de certains produits résiduels.

Le document EP-A-0 052 919 décrit un produit composé de saccharose et associé éventuellement à un édulcorant qui se présente sous forme d'une poudre convenablement conditionnée pour se dissoudre de manière facile et rapide dans l'eau.

La demande de brevet EP-A-0 334617 (appartenant à l'état de la technique visé à l'article 54(3) CBE) et la demande de brevet EP-A-0 036 738 décrivent des produits sous forme de poudre qui contiennent au moins 50% de saccharose d'une densité apparente comprise entre 20% et 70% de la densité apparente du sucre en poudre du commerce auquel est additionnée une quantité d'adjuvants constitués d'édulcorants à haut pouvoir sucrant de manière que les produits présentent par unité volumétrique le même pouvoir sucrant que le sucre en poudre du commerce.

La demande de brevet EP-A-0 219 150 décrit l'utilisation des maltodextrines dans des produits sucrants.

### Eléments caractéristiques de l'invention

Le but ainsi visé est atteint par un produit sous forme de poudre contenant au moins 50 % de saccharose, d'une densité apparente comprise entre 20 % et 70 %, de préférence comprise entre 25 % et 50 % de la densité apparente du sucre en poudre du commerce, auquel est additionnée une quantité d'adjuvants constitués totalement ou partiellement d'édulcorants à haut pouvoir sucrant et éventuellement d'autres produits sucrants que le saccharose, de manière que le produit présente globalement par unité volumétrique le même pouvoir sucrant que le sucre en poudre du commerce.

Lesdits produits sucrants non artificiels autres que le saccharose,qui peuvent être éventuellement ainsi ajoutés selon une forme d'exécution particulière de l'invention dans le produit, sont constitués de préférence par des maltodextrines.

De préférence, on utilise des malodextrines obtenues par hydrolyse partielle d'une solution aqueuse d'amidon dont le ED est compris entre 2 et 20. Le ED est la mesure de la quantité totale de sucres réducteurs dans un hydrolysat d'amidon qui est calculée comme dextrose et exprimée comme pourcentage sur la matière sèche totale, le dextrose ayant un ED égal à 100 et l'amidon un ED égal à 0.

On sait qu'il existe un certain nombre d'édulcorants dits de synthèse se caractérisant par un pouvoir sucrant élevé. Ils sont vendus entr'autres sous les dénominations commerciales ou les marques enregistrées suivantes : Aspartame, Acesulfame-K, Sucralose, Alitame. Leur pouvoir sucrant est particulièrement élevé et ils doivent donc être ajoutés en quantités très faibles dans le produit. Leur contribution à la densité apparente du produit résultant est donc très faible et peut donc être considéré comme négligeable.

En pratique, la condition à remplir est donc que la contribution des édulcorants à haut pouvoir sucrant au pouvoir sucrant du produit final, s'ajoutant à celui obtenu par la présence dans le produit d'au moins 50 % de saccharose et le cas échéant obtenu par la présence d'autres produits sucrants non artificiels, soit telle que le produit final présente, le même pouvoir sucrant que le même volume unitaire de sucre en poudre du commerce.

Ceci rend donc nécessaire de conférer, tout en gardant le caractère d'une poudre granuleuse, aux constituants non artificiels (à savoir le saccharose et le cas échéant lesdits autres produits sucrants), une densité apparente plus réduite.

La demanderesse a donc été amenée à mettre au point un procédé pour l'obtention de tels produits.

La présente invention propose un procédé consistant à agglomérer un mélange de saccharose présentant une granulométrie inférieure à 0,4 mm
et un édulcorant à pouvoir sucrant particulièrement élevé et à humidifier la poudre à l'aide d'eau en phase liquide ou en phase vapeur et à alimenter et maintenir la poudre humide dans une chambre d'agglomération en présence d'air humide chaud, en provoquant l'agglomération des particules rendues collantes sous l'effet de l'humidité.

Le produit est ensuite séché, à l'aide d'air chaud et ensuite refroidi et tamisé afin de retenir le produit de granulométrie adéquate, en recyclant les particules hors normes.

Avantageusement, on alimente de manière dosée dans la chambre d'agglomération une quantité d'eau de l'ordre de 10 à 15% par rapport au sucre. La température règnant dans cette chambre est de l'ordre de 65 à 70°C.

Dans ces conditions, le temps de maintien dans ladite chambre d'agglomération est de l'ordre de quelques dizaines de secondes.

Lors du séchage, l'on réduit avantageusement la teneur en humidité du produit jusqu'à une valeur de inférieure à 1%.

Le séchage et le refroidissement ultérieur peuvent avantageusement se réaliser à l'aide d'un lit fluidisé.

La technique décrite permet d'obtenir des produits présentant des valeurs de densité apparente de l'ordre de 40 à 50 % de la valeur de densité apparente du sucre cristallisé du commerce.

### Exemple.

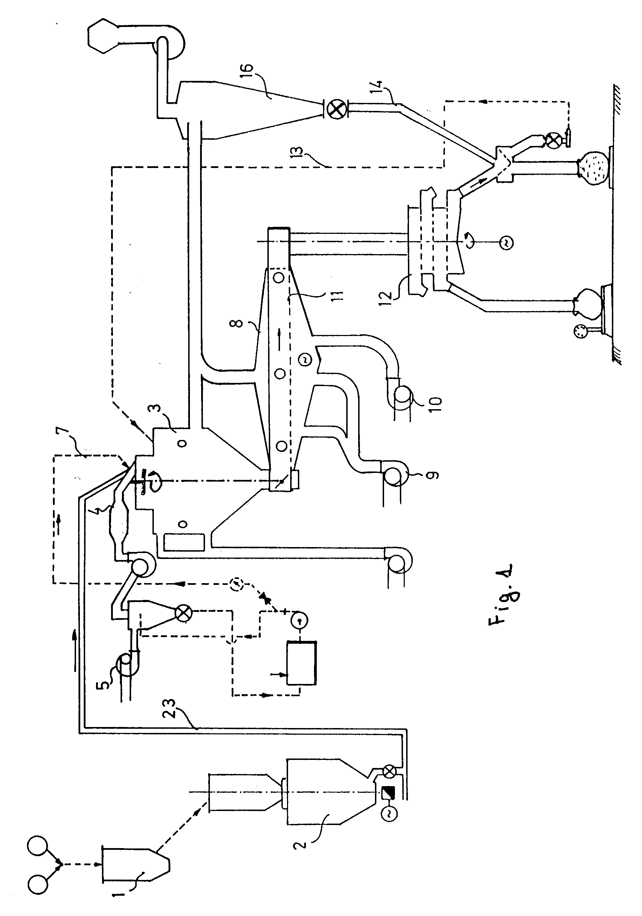

Dans cet exemple, on a visé à préparer un produit constitué de 99,6% de saccharose et de 0,4% d'édulcorant à fort pouvoir sucrant qui, globalement pour une unité volumétrique, présente le même pouvoir sucrant que le sucre en poudre du commerce. Pour ce faire; on a eu recours à l'installation représentée à la figure. Dans celle-ci, on introduit dans un mélangeur 1 continu ou discontinu d'une part du saccharose et d'autre part un édulcorant à pouvoir sucrant élevé (aspartame).

Après un temps moyen de mélange de 15 minutes, la substance est introduite dans un réservoir de stockage 2 d'où elle est prélevée par le conduit 23 pour l'introduire de manière dosée dans une chambre d'agglomération verticale 3. Dans cette même chambre, on introduit de l'air chauffé par vapeur dans le conduit 4, la vapeur étant elle-même produite par des installations adéquates.

Dans le cas indiqué, l'air, chauffé par un réchauffeur est propulsé par le ventilateur 5 sur le plateau tournant disposé au sommet de la chambre; l'humidification s'effectue par l'eau chaude injectée via la conduite 7.

La matière est maintenue en suspension dans la chambre d'agglomération en atmosphère humide. La densité apparente souhaitée est obtenue par simple agglomération des particules entre elles.

Dans la première partie d'un sécheur/refroidisseur 8, alimenté par une soufflerie 9 en air chaud, le séchage s'effectue à l'air sec soufflé en dessous et à travers un tapis 11 qui transporte la matière d'une extrémité à l'autre de la chambre 8.

Ensuite, la matière est refroidie dans la deuxième partie de la chambre 8, alimentée par la soufflerie 10, le refroidisseur s'effectuant à l'air froid cette fois soufflé en dessous et à travers le tapis 11.

On obtient la granulométrie souhaitée par tamissage sur un tamis 12. Les fines séparées sont recyclées par le conduit 13 à la chambre 12.

Un prélèvement d'air est prévu aussi bien à la sortie de la chambre 3 que du sécheur/refroidisseur 8. L'air qui entraîne nécessairement des fines est receuilli dans un conduit, les fines sont séparées dans le cyclone 16 et recyclées par le conduit 13 et 14 comme indiqué.

A l'aide d'un tel appareillage, on a obtenu un produit de bonne qualité de la manière suivante : du sucre impalpable qui contient 0,4% d'aspartame est insufflé à raison de 400 kg/h dans la chambre 3 en même temps que 60 l/h d'eau à 60°C. On obtient un produit présentant une densité apparente de 46% comparé de la densité apparente de sucre en poudre du commerce.

L'intérêt de la technique décrite est d'obtenir une produit de bonne granulométrie, présentant des qualités satisfaisantes du point de vue de la coulabilité (free flowing). Ces produits, qui sont nettement moins caloriques par unité volumétrique que le sucre du commerce, sont en ce qui concerne l'aspect, le goût, le caractère sucrant et l'impression gustative comparables au sucre cristallin.

## Revendications

1. Procédé d'obtention de produits sous forme de poudre contenant au moins 50% de saccharose, d'une densité apparente comprise entre 20% et 70%, de préférence comprise entre 20% et 50% de la densité apparente du sucre en poudre du commerce, auquel est additionnée une quantité d'adjuvants constitués totalement ou partiellement d'édulcorants à haut pouvoir sucrant et éventuellement d'autres produits sucrants que le saccharose, de manière que le produit présente globalement par unité volumétrique le même pouvoir sucrant que le sucre en poudre du commerce, caractérisé en ce qu'il consiste à agglomérer un mélange de saccharose présentant une granulométrie inférieure à 0,4 mm, de préférence 0,2 mm et un édulcorant à pouvoir sucrant particulièrement élevé et à humidifier la poudre à l'aide d'eau en phase liquide ou en phase vapeur et à alimenter et maintenir la poudre humide dans une chambre d'agglomération en présence d'air humide chaud, en provoquant l'agglomération des particules rendues collantes sous l'effet de l'humidité, après quoi le produit est séché, à l'aide d'air chaud et ensuite refroidi et tamisé afin de retenir le produit de granulométrie adéquate, en recyclant les particules hors norme.

2. Procédé selon la revendication 1 caractérisé en ce qu'on dose dans la chambre d'agglomération une quantité d'eau de l'ordre de 10 à 15% par rapport au sucre, la température réglant dans cette chambre étant de l'ordre de 65-70°C, le temps de maintien dans ladite chambre d'agglomération étant de l'ordre de quelques dizaines de secondes.

3. Procédé selon l'une quelconque des revendications 1 ou 2 caractérisé en ce que, lors du séchage, l'on réduit la teneur en humidité du produit jusqu'à une valeur inférieure à 1%.

4. Procédé selon l'une quelconque des revendications 1 à 3 caractérisé en ce que le séchage et le refroidissement ultérieur sont réalisés à l'aide d'un lit fluidisé.

5. Procédé selon l'une quelconque des revendications 1 à 4 caractérisé en ce que les produits obtenus présentent des valeurs de densité apparente de l'ordre de 40 à 50% de la valeur de densité apparente du sucre cristallisé du commerce.

6. Procédé selon l'une quelconque des revendications 1 à 5 caractérisé en ce que les produits sucrants autres que le saccharose sont constitués par des maltodextrines.

7. Procédé selon revendication 6 caractérisé en ce que les maltodextrines sont obtenues par hydrolyse partielle d'une solution aqueuse d'amidon, dont le ED est compris entre 2 et 20.

## Claims

1. Process for obtaining products in the form of powder, which contains at least 50% of saccharose, with an apparent density of between 20% and 70%, preferably of between 20% and 50% of the apparent density of commercial powder sugar, to which is added a quantity of adjuvants consisting wholly or partially of sweeteners with high sweetening power and optionally of sweetening products other than saccharose, so that the product exhibits overall the same sweetening power per volumetric unit as commercial powder sugar, characterized in that it consists in agglomerating a mixture of sucrose exhibiting a particle size lower than 0.4 mm, preferably 0.2 mm, and a sweetener with particularly high sweetening power and in moistening the powder with the aid of water in liquid phase or in vapour phase and in feeding and maintaining the moist powder in an agglomeration chamber in the presence of hot moist air, while causing the agglomeration of the particles which are made adhesive under the effect of the moisture after which the product is dried using hot air and cooled and screened in order to retain the product of suitable particle size, while the particles outside the specification are recycled.

2. Process as claimed in Claim 1, characterized in that a quantity of water of the order of 10 to 15% relative to the sugar is metered into the agglomeration chamber, the temperature prevailing in this chamber being of the order of 65-70°C, the holding time in this agglomeration chamber being of the order of a few tens of seconds.

3. Process as claimed in either of Claims 1 or 2 characterized in that, during the drying, the moisture content of the product is reduced to a value lower than 1%.

4. Process as claimed in any one of Claims 1 to 3, characterized in that the drying and the subsequent cooling are carried out with the aid of a fluidized bed.

5. Process as claimed in any one of Claims 1 to 4, characterized in that the products obtained exhibit apparent density values of the order of 40 to 50% of the apparent density value of commercial crystallized sugar.

6. Process as claimed in any one of Claims 1 to 5, characterized in that the sweetening products other than sucrose, consist of maltodextrins.

7. Process as claimed in Claim 6, characterized in that the maltodextrins are obtained by partial hydrolysis of an aqueous solution of starch whose ED is between 2 and 20.

## Patentansprüche

1. Verfahren zur Herstellung eines pulverförmigen Produktes, das mindestens 50% Sacharose enthält, dessen Rohdichte zwischen 20% und 70%, vorzugsweise 20% und 50% der Rohdichte von handelsüblichem Puderzucker liegt, und zu dem eine gewisse Menge Zusatzstoffe hinzugegeben wird, die ganz oder teilweise aus Süßstoffen mit hoher Süßkraft, und eventuell aus von Sacharose verschiedenen Süßstoffen bestehen, so daß das Produkt insgesamt pro volumeneinheit die gleiche Süßkraft wie handelsüblicher Puderzucker aufweist, dadurch gekennzeichnet, daß ein Gemisch aus Sacharose, die eine Körnung von weniger als 0,4 mm, vorzugsweise 0,2 mm aufweist, und einem Süßstoff mit besonders hoher Süßkraft agglomeriert wird, und das Pulver mit Hilfe von Wasser in flüssiger oder dampfförmiger Phase angefeuchtet wird, und das feuchte Pulver in Gegenwart von warmer, feuchter Luft in eine Agglomerationskammer eingeleitet und dort zurückgehalten wird, wobei die Agglomeration der durch die Feuchtigkeit klebrig gewordenen Partikel hervorgerufen wird, wonach das Produkt mit Hilfe von warmer Luft getrocknet wird und dann abgekühlt und gesiebt wird, um das Produkt mit geeigneter Körnung zurückzuhalten, wobei die außerhalb der Norm liegenden Partikel rezyklisiert werden.

2. Verfahren gemäß Anspruch 1, dadurch gekennzeichnet, daß eine gewisse Menge Wasser von ungefähr 10 bis 15%, bezogen auf den Zucker, in die Agglomerationskammer gegeben wird, wobei in dieser Kammer eine Temperatur von ungefähr 65-70°C herrscht, und die Verweilzeit in der Agglomerationskammer einige zehn Sekunden beträgt.

3. Verfahren gemäß irgendeinem der Ansprüche 1 oder 2, dadurch gekennzeichnet, daß der Feuchtigkeitsgehalt des Produktes beim Trocknen bis auf einen Wert von weniger als 1% vermindert wird.

4. Verfahren gemäß irgendeinem der Ansprüche 1 bis 3, dadurch gekennzeichnet, daß die Trocknung und die spätere Abkühlung mit Hilfe eines Wirbelbetts ausgeführt werden.

5. Verfahren gemäß irgendeinem der Ansprüche 1 bis 4, dadurch gekennzeichnet, daß die erhaltenen Produkte Rohdichte-Werte von ungefähr 40 bis 50% des Rohdichte-Wertes von handelsüblichem Kristallzucker aufweisen.

6. Verfahren gemäß irgendeinem der Ansprüche 1 bis 5, dadurch gekennzeichnet, daß die von Sacharose verschiedenen Süßstoffe aus Maltodextrinen bestehen.

7. Verfahren gemäß Anspruch 6, dadurch gekennzeichnet, daß die Maltodextrine durch partielle Hydrolyse einer wässerigen Stärkelösung, dessen DE (Dextrose Equivalent) zwischen 2 und 20 liegt, erhalten werden.
